# EUROPÄISCHE PATENTSCHRIFT

(11) **EP 2 485 402 B1**
(45) Veröffentlichungstag und Bekanntmachung des Hinweises auf die Patenterteilung: **27.03.2019**
(21) Anmeldenummer: 12000630.9
(22) Anmeldetag: 01.02.2012
(51) Int. Cl.: H04B 17/391, H04L 25/02, H04L 25/03

(54) **Verfahren zum Entzerren von Funksignalen**
Method for equalising radio signals
Procédé de suppression de la distorsion de signaux radio

(30) Priorität: 05.02.2011 DE 102011010465
(43) Veröffentlichungstag der Anmeldung: 08.08.2012
(73) Patentinhaber: Diehl Defence GmbH & Co. KG, 88662 ÜBERLINGEN (DE)
(72) Erfinder:
(74) Vertreter: Diehl Patentabteilung

(56) Entgegenhaltungen:
- EP-A1- 0 878 921
- EP-A1- 1 715 596
- DE-A1- 19 606 102
- US-A1- 2004 095 907
- US-A1- 2007 127 608
- US-A1- 2007 225 041

## Beschreibung

Die Erfindung betrifft ein Verfahren zum Entzerren von Funksignalen gemäß dem Oberbegriff des Anspruchs 1. Ein solches Verfahren ist aus der EP 0 878 921 A1 bekannt.

Bei einer Funkkommunikation zwischen einem Sender und einem Empfänger werden die vom Sender ausgesendeten Signale auf dem Übertragungsweg zum Empfänger, dieser Übertragungsweg kann als Übertragungskanal, Funkkanal oder kurz: Kanal bezeichnet werden, verzerrt. Durch diese Veränderung ist der Empfang gestört und die Signale können evtl. nicht mehr entziffert werden. Es ist daher erforderlich, eine Schätzung der Kanaleigenschaften vorzunehmen, um den Verzerrungen entgegensteuern zu können. Mit Hilfe einer solchen Kanalschätzung können durch den Übertragungsweg verursachte Signalverzerrungen mit Hilfe eines Entzerrers wieder ausreichend rückgängig gemacht werden, um die Signale entziffern zu können.

Zur Kanalschätzung ist es bekannt, den Kanal in einem Kanalmodell zu modellieren. Das Kanalmodell erhält hierbei eine sogenannte Kanalimpulsantwort, die die Veränderung des Signals in Kanal bewirkt. In der digitalen Signalverarbeitung wird die Veränderung des Signals vom Sender zum Empfänger durch eine Faltung des gesendeten Signals mit der Kanalimpulsantwort des Kanalmodells dargestellt. Ist die Kanalimpulsantwort bekannt, so kann der Empfänger diese verwenden, um damit das empfangene Signal zu entzerren und so das gesendete Signal zu rekonstruieren.

Zur Bestimmung einer Kanalimpulsantwort werden z. B. im GSM-Bereich, bei UMTS und neueren Mobilfunkverfahren bekannte Trainingssequenzen vom Sender zum Empfänger mitgesendet, die eine bekannte Sendefolge von Signalen enthalten. Aus einer bekannten Trainingssequenz und dem empfangenen und verzerrten Signal kann die Übertragungsfunktionen des Kanals und damit seine Kanalimpulsantwort rückgerechnet werden. Auf der Basis dieser durch den Kanal verfälschten Trainingssequenzen werden dann die für die Einstellung des Entzerrers erforderlichen Parameter ermittelt. Zur korrekten Entzerrung können aus der Kanalimpulsantwort die korrekten Parameter für den Entzerrer berechnet werden.

Bewegen sich der Sender und der Empfänger relativ zueinander bzw. in einer Landschaft, so wird der Übertragungskanal variierende Eigenschaften und damit eine variierende Kanalimpulsantwort bewirken. Die Kanalimpulsantwort muss also laufend erneut geschätzt werden. Dies wird mit zunehmender Geschwindigkeit, z. B. bei einem Sender und/oder Empfänger in einem Flugkörper, immer aufwändiger. Die Umweglaufzeiten des Funkkanals bewirken, dass sich Echos eines bereits gesendeten Symbols, beispielsweise eines Bits, mit dem nächsten gesendeten Symbol überlagern und eine korrekte Demodulation bzw. Entzerrung erschweren oder sogar unmöglich machen.

Es ist eine Aufgabe der vorliegenden Erfindung, ein Verfahren zum Entzerren von Funksignalen anzugeben, das auch für einen in einer Landschaft schnell bewegten Sender und/oder Empfänger zuverlässige Entzerrungsergebnisse der Funksignale erzeugt.

Dieser Aufgabe wird durch das Verfahren gemäß Anspruch 1 gelöst. Vorteilhafte Ausgestaltungen der Erfindung sind in den abhängigen Ansprüchen angegeben.

Die Erfindung geht hierbei von der Überlegung aus, dass bei einem Funkverkehr zwischen zueinander bewegten Kommunikationseinheiten, z. B. in einem Flugkörper und einer Bodenstation, unter anderem zwei Schwierigkeiten entstehen: Zum Einen ist die Relativgeschwindigkeit zwischen Sender und Empfänger relativ groß und der Flugkörper bewegt sich relativ schnell über die die Kanalimpulsantwort bewirkende Landschaft. Die Kanalimpulsantwort kann sich also innerhalb kürzester Zeit signifikant verändern. Zum Anderen können die Funkwege relativ lang sein, sodass zeitverzögerte und zudem dopplerverzerrte Funksignale am Empfänger eintreffen, die eine Demodulation erschweren bzw. unmöglich machen.

Bei dem erfindungsgemäßen Verfahren sind Daten der Landschaft, durch oder über die sich der Sender und/oder Empfänger bewegen, vorab bekannt. Diese können aus Kameradaten, also aus Landschaftsaufnahmen jedweder Art, aus beispielsweise mittels eines Satelliten erfassten topografischen Daten oder einem anderen Verfahren bekannt sein, sodass die bekannten Landschaftsdaten bzw. ein zweckmäßigerweise dreidimensionales Landschaftsmodell für eine Kanalsimulation verwendet werden kann. Auf eine Kanalmessung durch Trainingssequenzen und damit auf eine adaptive Bestimmung der Kanalimpulsantwort kann verzichtet werden. Es wird anstelle der langsamen Regelschleife der adaptiven Bestimmung eine schnelle deterministische Bestimmung verwendet, mit der die Kanalimpulsantwort aus theoretischen Berechnungen anhand der Landschaftsdaten ermittelt wird, zweckmäßigerweise in Echtzeit oder sogar im Voraus.

Die Bestimmung der Kanalimpulsantwort und die Entzerrung der Funksignale können in einem Empfänger geschehen, der die Funksignale empfängt. Es ist jedoch auch möglich, eine Vorverzerrung der Funksignale, im Folgenden ebenfalls als Entzerrung bezeichnet, durch den Sender vorzunehmen, um eine spätere Entzerrung durch den Empfänger zu erleichtern oder vorwegzunehmen. Es wird daher hier allgemein von einer Kommunikationseinheit gesprochen, die die Bestimmung der Kanalimpulsantwort und/oder die Entzerrung vornimmt, und die sowohl ein Sender oder ein Empfänger sein oder beides umfassen kann. Unter Entzerrung kann jede Signalveränderung verstanden werden, durch die ein Daten beinhaltendes und durch den Übertragungskanal verändertes Funksignal wieder in Richtung seines idealen Zustands - meist seines Sendezustands - verändert wird. Das Kanalmodell kann die Kanalimpulsantwort sein oder beinhalten. Aus dem Kanalmodell können Entzerrdaten für einen Entzerrer zum Entzerren der Funksignale berechnet werden, so dass daraus mit Hilfe eines Entzerrers die vom Sender zum Empfänger gesendeten Funksignale entzerrt werden können.

Zweckmäßigerweise wird das Kanalmodell vor einem Empfang der zu entzerrenden Funksignalen ermittelt. Hierzu ist das Landschaftsmodell zweckmäßigerweise vor dem Empfang der zu entzerrenden Funksignalen bekannt. Die Entzerrdaten können aus dem Landschaftsmodell offline, beispielsweise in einem Rechner eines Flugkörpers, vor oder während des Flugs bestimmt werden, sodass ein gewähltes Übertragungsverfahren offline unter realistischen Bedingungen simuliert werden kann. Vorteilhaft ist es, das Übertragungsverfahren in Abhängigkeit von den Kanaleigenschaften zu wählen. Es kann also für den ermittelten Kanal das am besten geeignete Übertragungs- bzw. Modulationsverfahren eingesetzt werden. Vorteilhafterweise kann der Zeitpunkt für eine Änderung des Übertragungs- bzw. Modulationsverfahrens vorab bestimmt werden, also bevor z. B. die Bitfehlerwahrscheinlichkeit einen vorher festgelegten Wert überschreitet. Bei einer bekannten Flugbahn in der bekannten Landschaft kann ein günstiger Zeitpunkt und/oder Ort zum Wechsel des Verfahrens vorab bestimmt werden, also noch bevor der Flugkörper den entsprechenden Ort oder die Zeit erreicht, ab dem das neue Verfahren günstiger ist.

Funksignale erreichen üblicherweise auf mehreren Wegen einen Empfänger, da sie von der Landschaft in verschiedenen Pfaden reflektiert und so auf den Empfänger gerichtet werden. Der Sendepfad verläuft also auf mehreren Wegen, ist also ein Mehrwegesendepfad, und ist maßgeblich für das Kanalmodell, da die Funksignale in Abhängigkeit vom durchlaufenen Weg zeitlich verzögert und gedämpft werden. Zudem erhalten die einzelnen Mehrwegpfade unterschiedliche Dopplerverschiebungen. Zur Ermittlung des Mehrwegesendepfads ist es bekannt, eine Strahlverfolgung, auch als Ray-Tracing bekannt, durchzuführen, also zu simulieren, welche Pfade ein Sendesignal zum Empfänger nimmt.

Erfindungsgemäß wird der Mehrwegesendepfad aus der Position des Senders und des Empfängers und dem Modell der Landschaft ermittelt. Durch das Vorhandensein des Landschaftsmodells kann der Mehrwegesendepfad vorab aus der Position des Senders und des Empfängers in der Landschaft ermittelt und der Einfluss auf die Übertragung simuliert werden. Nun kann das Kanalmodell aus dem Mehrwegesendepfad und dem Landschaftsmodell erstellt werden.

Das Verfahren ist besonders geeignet für einen Empfänger, der in einem Flugkörper angeordnet ist. Der Sender kann bodenstationär angeordnet sein, beispielsweise Teil einer Startplattform des Flugkörpers.

Eine weitere vorteilhafte Ausführungsform der Erfindung sieht vor, dass die Landschaft, auf die sich die Daten des Landschaftsmodells beziehen, von einem Flugkörper, der den Empfänger und eine Kamera enthält, überflogen wird, die Landschaft von der Kamera aufgenommen wird und das Landschaftsmodell aus Daten der Kamera gewonnen wird. Auf diese Weise kann das Landschaftsmodell in Echtzeit erstellt und das Kanalmodell entsprechend in Echtzeit ermittelt und auf die aktuell empfangenen Funksignale angewendet werden. Die Kamera kann jedwede Kamera sein, die zur Erstellung eines Landschaftsmodells geeignet ist. Besonders vorteilhaft ist ein Laserscanner, durch den richtungsabhängige Entfernungsdaten bestimmbar sind. Weiter vorteilhaft ist die Verwendung einer Navigationskamera als Kamera zur Erstellung des Landschaftsmodells, deren Daten zur Navigation des Flugkörpers verwendet werden. Auf diese Weise kann eine bereits vorhandene Flugkörperkamera zur Funkentzerrung mitverwendet werden.

Weiter wird vorgeschlagen, dass die Landschaft von einem Flugkörper, der den Empfänger enthält, überflogen wird und das Kanalmodell vom Flugkörper berechnet wird. Das Kanalmodell kann hierbei vorab oder in Echtzeit entsprechend der Position des Flugkörpers in der Landschaft berechnet werden, wobei das Kanalmodell zweckmäßigerweise nur für Flugbahnpunkte des Flugkörpers berechnet wird.

Es ist ebenfalls möglich und vorteilhaft, wenn die Landschaft von einem Flugkörper, der den Sender enthält, überflogen wird und das Kanalmodell vom Flugkörper berechnet wird. Zwar wird die Entzerrung üblicherweise im Empfänger vorgenommen, bei Bekanntheit des Kanalmodells im Sender kann jedoch eine Vorentzerrung vom Sender vorgenommen werden. Es können mithin Daten vom Sender gesendet werden, wobei unter Verwendung des Kanalmodells eine Vorentzerrung der gesendeten Daten durchgeführt wird. Hierdurch kann ein Empfang der Daten am Empfänger erleichtert werden, da deren Verzerrung gering gehalten werden kann.

Bei einer Bewegung eines Senders und/oder des Empfängers relativ zur Landschaft ist es vorteilhaft, wenn das Kanalmodell an die aktuelle Position des Senders bzw. Empfängers angepasst wird. Entsprechend kann vorgesehen sein, dass der Mehrwegesendepfad während der Bewegung entsprechend der Bewegung modifiziert wird, also an die Position des Senders bzw. Empfängers angepasst wird, und das Kanalmodell mit Hilfe des Landschaftsmodells erneut berechnet wird. Hierdurch kann das Kanalmodell an die aktuelle Position der Kommunikationseinheit angepasst werden.

Zweckmäßigerweise werden Entzerrdaten aus dem Kanalmodell in Echtzeit berechnet. Als Echtzeit kann angesehen werden, wenn das Kanalmodell aus der aktuellen Position der Kommunikationseinheit in der Landschaft und daraus die Entzerrdaten für die aktuelle Position berechnet werden.

Erfindungsgemäß wird das Kanalmodell für ein Gebiet, das ein den Sender und/oder den Empfänger enthaltender Flugkörper durchfliegen wird, berechnet, zweckmäßigerweise vom Flugkörper selbst, insbesondere während des Flugs. Anhand des Kanalmodells wird eine günstige Flugroute durch das Gebiet festgelegt, die z. B. einen guten Funkverkehr erlaubt.

Die Funksignalentzerrung kann weiter verbessert werden, wenn topografische Reflexionsdaten bei der Erstellung des Kanalmodells berücksichtigt werden. Die topografischen Reflexionsdaten können aus einer Oberflächenbeschaffenheit der Landschaft ermittelt werden, die dann mit den topografischen Daten zusammengeführt werden kann. Die Oberflächenbeschaffenheit der Landschaft kann aus Bildern der Landschaft oder Geodatenbanken gewonnen werden. So kann zum Beispiel aus Satellitenbildern Bewuchs an sich, eine Dichte des Bewuchses und/oder eine Bewuchsart, eine Oberflächenart, beispielsweise Sand, Stein, Wasser oder dergleichen, und/oder eine Bebauung ermittelt werden und als Information in die digitalen Höhendaten eingebunden werden. Alternativ oder zusätzlich kann eine vorhandene Geodatenbank verwendet werden, die Informationen, wie Bewuchs, Bebauung und/oder Bodenbeschaffenheit bereits beinhaltet.

Eine vorteilhafte Ausführungsvariante der Erfindung sieht vor, dass die Landschaft von einem Flugkörper, der den Empfänger und eine Kamera enthält, überflogen wird und die Oberflächenbeschaffenheit der Landschaft aus Bildern der Kamera ermittelt wird. Zur zuverlässigen Ermittlung der Oberflächenbeschaffenheit ist es vorteilhaft, wenn die Bilder in mehreren Spektralbereichen aufgenommen werden, beispielsweise jeweils im sichtbaren und im infraroten Spektralbereich.

Vorteilhafterweise wird die Landschaft von einem Flugkörper, der den Empfänger enthält, überflogen und eine Taktung für die Erstellung der Daten für den Entzerrer wird in Abhängigkeit von der Fluggeschwindigkeit des Flugkörpers gewählt. Hierdurch kann eine zuverlässige Entzerrung auch bei hohen Fluggeschwindigkeiten erreicht werden.

Die Erfindung ist außerdem gerichtet auf eine Vorrichtung zum Entzerren von Funksignalen nach einem Verfahren wie oben beschrieben. Hierzu enthält sie zweckmäßigerweise ein Steuermittel mit einem oder mehreren Steuerprogrammen, die alleine oder im Zusammenspiel dazu vorbereitet sind, einen, mehrere oder alle der beschriebenen Verfahrensschritte durchzuführen. Die Vorrichtung umfasst zweckmäßigerweise eine Kommunikationseinheit zur Kanalmodellierung und zur Durchführung des Funkverkehrs mit einer anderen Kommunikationseinheit.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: Eine Artillerierakete während einer Navigation durch eine Landschaft,
- Fig. 2: die Artillerierakete aus Fig. 2 in einer schematischen Darstellung,
- Fig. 3: ein Schema eines bekannten adaptiven Entzerrers und
- Fig. 4: einen entsprechend der Erfindung modifizierten Entzerrer.

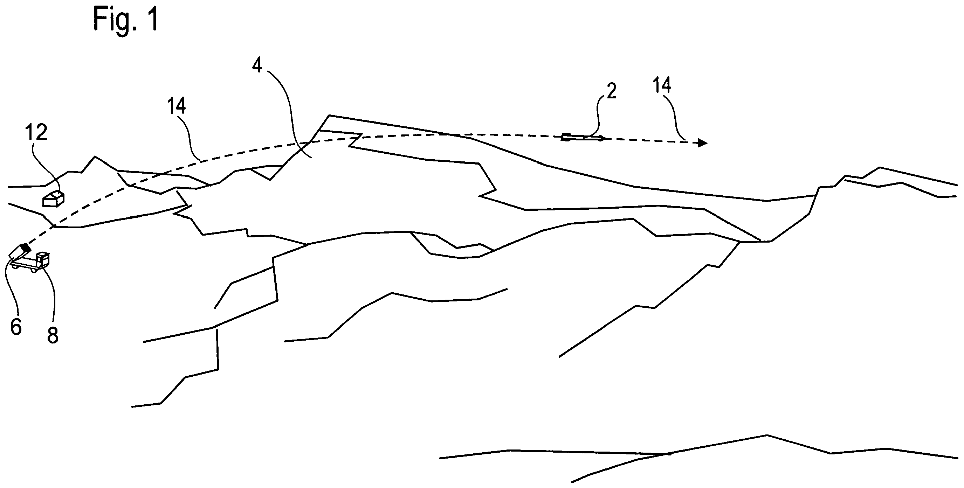

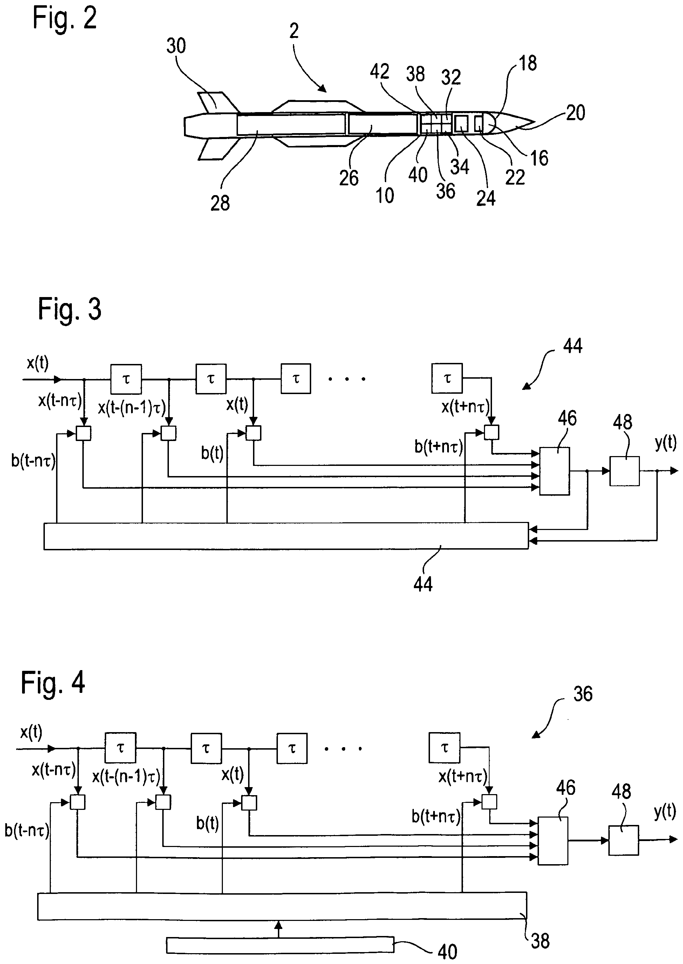

Fig. 1 zeigt einen Flugkörper 2 bei einem Flug durch eine Landschaft 4. Der Flugkörper 2 wurde von einer Startplattform 6 gestartet, die im gezeigten Ausführungsbeispiel ein LKW mit einer Startrampe für eine Vielzahl von Flugkörpern 2 trägt. Die Startplattform 6 ist mit einer Kommunikationseinheit 8 mit einem Sender und einem Empfänger zur Kommunikation mit einer entsprechenden Kommunikationseinheit 10 (siehe Fig. 2) im Flugkörper 2 bestückt. Durch die beiden Kommunikationseinheiten 8, 10 wird ein Funkkontakt zwischen dem Flugkörper 2 und der Startplattform 6 hergestellt und es werden Daten ausgetauscht. Ebenfalls vorhanden ist eine stationäre Kommunikationseinheit 12, beispielsweise in einem Gebäude, die zusätzlich oder alternativ zur Kommunikation mit der Kommunikationseinheit 8 aus dem Flugkörper 2 vorbereitet ist.

Anstelle des Flugkörpers 2 kann jedes andere Luft-, Boden- oder Seefahrzeug die Erfindung ausführen. Ebenfalls möglich ist die Ausgestaltung des Flugkörpers 2 als unbemanntes Aufklärungsflugzeug. Selbstverständlich ist auch die Verwendung eines Passagierflugzeugs oder eines anderen bemannten Flugzeugs möglich und vorteilhaft. Anstelle der stationären Kommunikationseinheiten 8, 12 sind bewegte Kommunikationseinheiten möglich, sodass sich sowohl der Sender als auch der Empfänger während des Funkverkehrs relativ zur Landschaft bewegen.

Die durch die Kommunikationseinheiten 8, 10, 12 übertragenen Funkdaten können folgende Daten enthalten: Steuerdaten zum Steuern des Flugs des Flugkörpers 2 und anderer Aktionen des Flugkörpers 2, Zieldaten, z. B. Bilddaten und/oder Koordinaten des Ziels, Bilddaten von anderen Objekten oder der Umgebung, die beispielsweise mit Suchkopfdaten des Flugkörpers 2 verglichen oder verarbeitet werden, Aufklärungsdaten des Flugkörpers 2, vom Flugkörper aufgenommene Bilder eines Ziels oder der Umgebung des Flugkörpers 2, Wetterdaten oder andere vom Flugkörper 2 aufgezeichnete Daten, Positionsdaten des Flugkörpers 2, Daten zur Flugbahn 14 des Flugkörpers 2 und/oder andere zur Funkkommunikation geeignete Daten.

Fig. 2 zeigt den Flugkörper 2 in einer schematischen Darstellung. Er enthält einen Suchkopf 16 hinter einem transparenten Dom 18, der während der größten Zeit des Flugs durch eine Kappe 20 geschützt wird. Der Suchkopf 16 ist mit einer Kamera 22 ausgerüstet und mit einem Steuermittel 24 zur Steuerung des Flugs des Flugkörpers 2 und anderer Prozesse verbunden. Auch die Kommunikationseinheit 8 ist mit dem Steuermittel 24 signaltechnisch verbunden. Weiter ist der Flugkörper 2 mit einem zur Detonation vorgesehenen Wirkeinsatz 26, einem Raketentriebwerk 28 und Steuerflügeln 30 ausgerüstet, die vom Steuermittel 24 - beispielsweise unter Verwendung von Funkdaten - angesteuert werden und mit denen der Flugkörper 2 gelenkt wird.

Während des Flugs des Flugkörpers 2 ist dessen Kommunikationseinheit 10 funktechnisch mit zumindest einer Kommunikationseinheit 8, 12 verbunden. Hierzu umfasst die Kommunikationseinheit 10 des Flugkörpers 2 einen Sender 32 und einem Empfänger 34. Auf dem Übertragungsweg zwischen den Kommunikationseinheiten 8, 10, 12 werden die übertragenen Funkdaten verzerrt. Dies liegt daran, dass sich die Funkdaten auf mehreren Sendepfaden durch die Landschaft 4 verbreiten und entsprechend der Sendepfade in der Landschaft 4 reflektiert werden. Ein Funksignal erreicht also auf mehreren verschiedenen Sendepfaden den entsprechenden Empfänger in einer Kommunikationseinheit 8,10, 12. Diese Mehrzahl von Übertragungswegen wird im Folgenden als Mehrwegesendepfad bezeichnet. Weiter wirkt der Dopplereffekt bei einer Relativgeschwindigkeit zwischen den Kommunikationseinheiten 8, 10, 12 verzerrend auf die Daten enthaltenden Funksignale. Außerdem können noch andere bekannte technische Effekte die Funksignale verzerren. Zum Entzerren der Funksignale ist die Kommunikationseinheit 10 mit einem Entzerrer 36 ausgestattet. Dieser erhält Entzerrdaten bzw. ein Kanalmodell, aus dem die Entzerrdaten berechnet werden, von einem Kanalschätzer 38. Der Kanalschätzer 38 dient zum Ermitteln eines Kanalmodells, der die Verzerrung der Funksignale auf ihrem Mehrwegesendepfad simuliert und der Entzerrdaten. Der Mehrwegesendepfad wird wiederum von einem Pfadermittler 40 ermittelt. Dieser erhält Daten zu einem dreidimensionalen Landschaftsmodell von einem Datenspeicher 42.

Zum Entzerren von Funkdaten, die durch den Empfänger 34 empfangen oder dem Sender 32 gesendet werden, werden zunächst Daten eines dreidimensionalen Landschaftsmodels benötigt. Diese können auf verschiedene Weisen beschafft werden. Eine Möglichkeit besteht darin, auf Landschaftsdaten zurückzugreifen, die aus einer Satellitenmessung gewonnen wurden. So steht beispielsweise eine digitale Datenbasis der Shuttle-Radar-Topography-Mission (SRTM) der NASA aus dem Jahr 2000 frei zur Verfügung. Darin abgebildet ist die Landoberfläche der Erde zwischen 60° Süd und 60° Nord. Die Landoberfläche ist darin in Höhen mit einem Raster von z. B. 100 m angegeben. Hieraus kann ein dreidimensionales Landschaftsmodell ohne weiteres erzeugt werden. Es liegen auch erheblich genauere topografische Daten aus anderen Datenbasen vor, die ebenfalls verwendet werden können. Beispielhaft seien die topografischen Daten der Satelliten TanDEMX und TerraSAR-X erwähnt, die topografische Daten der Erde aufzeichnen.

Eine weitere Möglichkeit besteht darin, dass die Landschaftsdaten aus Kameradaten der Kamera 22 des Suchkopfs 16 oder einer anderen Kamera des Flugkörpers 2 generiert werden. Ist beispielsweise eine Kamera 22 als Laserscanner ausgeführt, so kann aus den durch die Kamera 22 zur Verfügung gestellten Entfernungsdaten ein Landschaftsmodell der Landschaft, die vom Flugkörper 2 überflogen wird, erstellt werden. Ebenfalls möglich sind Radardaten aus einer Radarkamera, die scannend oder ortsaufgelöst fotografierend arbeitet. Auch ist es möglich, Daten aus einer Navigationskamera des Flugkörpers 2 zu verwenden. Dies kann auch die Kamera 22 sein. So wird beispielsweise bei der terraingestützten Navigation mit einem Laserscanner navigiert. Dieser kann auch zum Erzeugen der Daten des dreidimensionalen Landschaftsmodells verwendet werden.

Die Daten des Landschaftsmodells können im Datenspeicher 42 hinterlegt sein, wie Satellitendaten. Auch durch die Kamera 22 erzeugte Landschaftsdaten können dort hinterlegt werden oder direkt von der Kamera 22 an den Pfadermittler 40 übergeben werden.

Aus den Daten des Landschaftsmodells und den Standorten von zumindest zwei Kommunikationseinheiten 8, 10, 12, zwischen denen die Funkverbindung stattfindet, ermittelt der Pfadermittler 40 den Mehrwegesendepfad für die aktuelle oder eine zukünftige Position des Flugkörpers 2. Es müssen hierfür die Positionen der Teilnehmer bekannt sein. Dies ist oftmals der Fall, da in der Regel bei zueinander bewegten kommunizierenden Einheiten ein Positionssystem, beispielsweise als GPS bekanntes Global Positioning System oder ein inertiales Messsystem, auch als IMU Inertial Measurement Unit bekannt, eingesetzt wird und eine bi-direktionale Funkverbindung vorhanden ist. Auf diese Weise weiß jeder Teilnehmer den eigenen Standort und den Standort des jeweils anderen Teilnehmers.

Die Ermittlung des Mehrwegesendepfads ist auch als Ray-Tracing bekannt. Es werden die wichtigsten Übertragungspfade, z. B. nach dem Kriterium der Dämpfung und der Laufzeit des entsprechenden Pfads, ausgewählt. Mit Hilfe des Ray-Tracing-Verfahrens wird ein deterministisches Modell eines Funkkanals erstellt. Dazu können alle möglichen Strahlen zwischen einer Quelle und einem potentiellen Empfänger ermittelt werden. Dann können die Reflexions- und Transmissionskoeffizienten für jeden Pfad ermittelt werden. Als Ergebnis bekommt man für jeden Strahl bzw. Pfad die Laufzeit, die Intensität und den Einfallswinkel bezüglich der Ausbreitungsrichtung des Empfängers.

Daten zum Mehrwegesendepfad werden nun vom Pfadermittler 40 an den Kanalschätzer 38 übergeben. Aus dem bekannten Mehrwegesendepfad wird nun ein Kanalmodell vom Kanalschätzer 38 berechnet. Es ist auch möglich, dass der Kanalschätzer 38 und der Pfadermittler 40 eine einzige Einheit sind, die anhand der Landschaftsdaten ein Kanalmodell erstellt. Dieses Kanalmodell, auch Kanalimpulsantwort genannt, stellt die Verzerrung des Funksignals zwischen den betroffenen Kommunikationseinheiten 8, 10, 12 dar. Das entsprechende Kanalmodell repräsentiert hierbei verzerrende Eigenschaften der Übertragungspfade des Mehrwegesendepfads. Die Übertragung des Funksignals über den Kanal kann durch eine Faltung des Funksignals mit der Kanalimpulsantwort des Kanals nachgebildet werden. Durch diese Faltung kann das Empfangssignal nachgebildet werden. Entsprechend kann die Kanalimpulsantwort dazu verwendet werden, dass Funksignal bzw. die Funkdaten zu entzerren. Die Kanalimpulsantwort kann als eine Anzahl von Filterkoeffizienten oder anderen Entzerrdaten dargestellt werden, mit denen die Entzerrung durchgeführt werden kann. Die Entzerrdaten bzw. die Kanalimpulsantwort wird vom Kanalschätzer 38 bereitgestellt.

Aus diesen Daten entzerrt der Entzerrer 36 das Funksignal. Hierbei handelt es sich in erster Linie um das empfangene Funksignal, da die Entzerrung üblicherweise an den empfangenen Signalen vorgenommen wird. Es ist jedoch auch möglich, die Sendedaten bereits vorzuentzerren, sodass sie teilweise oder weitgehend entzerrt beim Empfänger ankommen - entsprechend der ermittelten Kanalimpulsantwort. Hierdurch kann der Empfänger das vorentzerrte Signal mit Hilfe einfacher und standardisierter Verfahren zuverlässig ermitteln bzw. nachentzerren, soweit dieses nötig ist.

Zur Pfadermittlung und/oder Kanalschätzung ist es vorteilhaft, nicht nur die geometrischen Daten der Landschaft sondern möglichst auch Reflexionsdaten der Landschaft zu kennen. Die Reflexion wird durch einen Bewuchs, Bebauung oder die Landschaftsart, beispielsweise Wasser, Bewuchs oder Stein, erheblich beeinflusst. Aus Bildern von z. B. Landsat oder militärischen Satelliten, die in verschiedenen Spektralbereichen aufgenommen wurden, kann Wasser, dichter Bewuchs, Bebauung oder dergleichen ermittelt werden und als Information in die Höhendaten bzw. Landschaftsdaten eingebunden werden. Aus diesen Daten kann ein Reflexionsfaktor für den Sendepfad ermittelt werden. Alternativ oder zusätzlich kann eine vorhandene Geo-Datenbank verwendet werden, die Informationen wie Bewuchs, Bebauung und Bodenbeschaffenheit, insbesondere die Dielektrizitätszahl und/oder Leitfähigkeit, bereits beinhaltet, um die Genauigkeit der Pfadermittlung und/oder Kanalschätzung zu erhöhen. Mit Landschafts- und Reflexionsdaten und der relativen Geschwindigkeit zwischen Sender und Empfänger lässt sich die Kanalimpulsantwort besonders genau bestimmen.

Mit der Kanalimpulsantwort kann die Entzerrung durch den Entzerrer 36 durchgeführt werden. Hierbei können mit den Koeffizienten der Kanalimpulsantwort die Koeffizienten für den Entzerrer bestimmt werden, damit dieser die Entzerrung durchführen kann. In Fig. 3 und Fig. 4 sind zwei verschiedene Entzerrer 36, 44 schematisch dargestellt. Während Fig. 4 den Entzerrer 36 einer Kommunikationseinheit 8, 10, 12 schematisch zeigt, wird anhand der Darstellung aus Fig. 3 ein bekannter Entzerrer 44 aus dem Stand der Technik erläutert.

Diesem Entzerrer 44 wird das Signal x(t) aus dem Empfänger 34 zugeführt. Das Signal wird zu diskreten Zeitpunkten regelmäßig abgetastet, sodass aus dem kontinuierlichen Signal ein diskretes Abtastsignal x(t-nτ) wird. Die Zeitspanne τ ist hierbei die reziproke Taktrate der Abtastung des Signals. Es wird somit für jeden Abtastzeitpunkt ein Abtastsignal bzw. Abtastwert gebildet. Die Abtastwerte werden mit Entzerrkoeffizienten b multipliziert, wobei jedem Abtastzeitpunkt ein Entzerrkoeffizient zugewiesen wird. Die Zeitspanne τ wird zweckmäßigerweise auch in Abhängigkeit der Relativgeschwindigkeit zwischen den, den Funkkanal herstellenden Kommunikationseinheiten 8, 10, 12 gewählt und zweckmäßigerweise auch in Abhängigkeit von der verwendeten Wellenlänge. So können mit dem zeitlichen Abstand λ /(2 x 8 x v) die Abtastzeitpunkte gesetzt werden, wobei λ die Wellenlänge und v die Geschwindigkeit des Flugkörpers 2 bzw. die Relativgeschwindigkeit zwischen den beteiligten Kommunikationseinheiten 8, 10, 12 ist.

Bei dem in Fig. 3 gezeigten bekannten Entzerrer werden die Entzerrkoeffizienten b durch eine Regelschleife in einem adaptiven Koeffizientenanpasser 44 angepasst. Die aus den Multiplikationen erhaltenen Werte werden in einem Summationsglied 46 summiert und an einen Entscheider 48 gegeben. Der summierte Wert und die Entscheidung des Entscheiders 48 wird an den Koeffizientenanpasser 44 rückgekoppelt, der daraus neue Entzerrkoeffizienten b berechnet und zur Multiplikation mit den Abtastsignalen x gibt. Auf diese Weise werden die Entzerrkoeffizienten b adaptiv ermittelt. Die Zeitspannen τ bzw. die Taktrate für die Abtastung ist hierbei so zu wählen, dass die Taktrate schneller als die Bitrate ist, da sonst Aliasing auftritt. Für jedes Bit werden daher mehrere Abtastwerte und damit mehrere Entzerrkoeffizienten b berechnet, wobei die Multiplikationsprodukte summiert werden und dem Entscheider 48 zur Verfügung gestellt werden. Dieser entscheidet nun für jedes Bit, ob es auf 0 oder 1 gesetzt wird. Das Ergebnis ist das digitale Ausgangssignal y(t), das das entzerrte Funksignal bzw. die entzerrten Funkdaten repräsentiert.

Im Gegensatz zu dieser adaptiven Funkdatenentzerrung wird bei dem in Fig. 4 dargestellten Entzerrer 36 eine deterministische Entzerrung verwendet. Daten aus dem Pfadermittler 40 werden an den Kanalschätzer 38 übergeben, der daraus die Entzerrkoeffizienten b ermittelt. Das für den Entzerrer 44 Ausführte gilt in gleicher Weise für den Entzerrer 36, wobei jedoch auf die Rückkopplung nach dem Summationsglied 46 bzw. den Entscheider 48 verzichtet wird. Die Entzerrkoeffizienten b werden unmittelbar berechnet und somit deterministisch bestimmt.

Ein großer Vorteil dieses Verfahrens liegt in der zügigen Erstellung der Entzerrkoeffizienten b, ohne dass eine adaptive Regelung notwendig ist. Ein weiterer großer Vorteil liegt darin begründet, dass zukünftige Entzerrkoeffizienten bzw. zukünftige Kanalimpulsantworten bestimmt werden können. Die Entzerrkoeffizienten b können für jeden Standort von Sender und Empfänger mit den entsprechenden Landschaftsdaten berechnet werden. Im Falle des Flugkörpers 2 kann somit in Echtzeit die Kanalimpulsantwort für den Standort des Flugkörpers 2 bzw. aller beteiligten Kommunikationseinheiten 8, 10, 12 ermittelt werden und darüber hinaus kann die Kanalimpulsantwort auch für einen zukünftigen Standort des Flugkörpers 2 berechnet werden, wenn auch für diesen Standort die Landschaftsdaten relevant sind und der entsprechende Mehrwegesendepfad geschätzt werden kann. Die entsprechende Rechenleistung vorausgesetzt, kann somit eine vergangene, aktuelle und zukünftige Impulsantwort eines Sendekanals zwischen zueinander bewegten Kommunikationseinheiten 8, 10, 12 ermittelt werden. Notwendig sind hierzu lediglich die Standorte der Kommunikationseinheiten 8, 10, 12 in der Landschaft und das zugehörige Landschaftsmodell bzw. die Daten daraus.

Entsprechend der Erfindung muss das Kanalmodell nicht mehr im Vorhinein berechnet und dem Flugkörper übergeben werden. Das Kanalmodell kann vom Flugkörper 2 selbst bzw. dessen Kommunikationseinheit 8 in Echtzeit und/oder zeitlich voraus berechnet werden, wobei die aktuelle Position des Flugkörpers bzw. eine zukünftige Position auf der Flugbahn 14 verwendet wird. Während des Flugs des Flugkörpers 2 werden der Mehrwegesendepfad und das entsprechende Kanalmodell zweckmäßigerweise fortlaufend aktualisiert und damit neu berechnet. Eine aufwändige Datenspeicherung des Mehrwegesendepfads oder des Kanalmodells bzw. der Entzerrkoeffizienten kann entfallen. Es wird daher nur das Kanalmodell berechnet, was aktuell oder zukünftig von der sendenden oder empfangenden Einheit benötigt wird.

Sind datenintensive Aufklärungsdaten, beispielsweise Aufklärungsbilder vom Flugkörper 2, an eine andere Kommunikationseinheit 8, 12 zu übermitteln, so ist die Vorverzerrung entsprechend des Kanalmodells vorteilhaft. Selbstverständlich ist es genauso gut möglich, dass das Kanalmodell von einer ortsfesten Kommunikationseinheit 8, 12 ermittelt und die vom Flugkörper 2 unentzerrten Sendedaten beim Empfang am Boden entzerrt werden. Dies ist insbesondere bei der Übertragung von datenintensiven Informationen, beispielsweise Zielbildern oder Luftaufklärungsbildern, von Vorteil.

Ein anderer Vorteil des erfindungsgemäßen Verfahrens resultiert daraus, dass Kanalmodelle für unterschiedliche Flugrouten berechnet werden können und damit die günstigste Flugroute bezüglich der Datenübertragung ausgewählt werden kann. So wird beispielsweise während des Flugs des Flugkörpers 2 ein zukünftiges Kanalmodell für mehrere mögliche zukünftige Flugrouten des Flugkörpers 2 berechnet und die Flugroute wird so gewählt, dass eine vorgegebene Kanalgüte erreicht wird. Die vorgegebene Kanalgüte kann eine vorgegebene Datenübertragungsrate vorgeben, sodass beispielsweise Aufklärungsbilder ununterbrochen gesendet bzw. empfangen werden können. Auf diese Weise wird die Flugroute des Flugkörpers 2 durch die Landschaft bzw. über die Landschaft anhand des Kanalmodells bestimmt.

### Bezugszeichenliste

- 2: Flugkörper
- 4: Landschaft
- 6: Startplattform
- 8: Kommunikationseinheit
- 10: Kommunikationseinheit
- 12: Kommunikationseinheit
- 14: Flugbahn
- 16: Suchkopf
- 18: Dom
- 20: Kappe
- 22: Kamera
- 24: Steuermittel
- 26: Wirkmittel
- 28: Raketentriebwerk
- 30: Steuerflügel
- 32: Sender
- 34: Empfänger
- 36: Entzerrer
- 38: Kanalschätzer
- 40: Pfadermittler
- 42: Datenspeicher
- 44: Koeffizientenanpasser
- 46: Summationsglied
- 48: Entscheider
- b: Entzerrkoeffizient
- τ: Abtastzeitspanne
- x: Abtastsignal
- y: Ausgangssignal

## Patentansprüche

1. Verfahren zum Entzerren von Funksignalen, bei dem aus der Position eines Senders (32) und eines Empfängers (34) in einer Umgebung ein Mehrwegesendepfad vom Sender (32) zum Empfänger (34) ermittelt, daraus ein Kanalmodell für diesen Mehrwegesendepfad erstellt wird und unter Verwendung des Kanalmodells die vom Sender (32) zum Empfänger (34) gesendeten Funksignale entzerrt werden,
wobei das Kanalmodell unter Verwendung von Daten eines Landschaftsmodells der Umgebung bestimmt wird,
**dadurch gekennzeichnet,**
**dass** der Mehrwegesendepfad aus der Position des Senders (32) und des Empfängers (34) und den Daten des Landschaftsmodells ermittelt wird und das Kanalmodell aus dem Mehrwegesendepfad und dem Landschaftsmodell erstellt wird, und
**dass** das Kanalmodell für ein Gebiet, das ein den Sender (32) und/oder den Empfänger (34) enthaltender Flugkörper (2) durchfliegen wird, berechnet wird, und eine Flugroute durch das Gebiet anhand des Kanalmodells festgelegt wird.

2. Verfahren nach Anspruch 1,
wobei die Landschaft von dem Flugkörper (2), der den Empfänger (34) und eine Kamera (22) enthält, überflogen wird, die Landschaft von der Kamera (22) aufgenommen und das Kanalmodell unter Verwendung der Daten der Kamera (22) gewonnen wird.

3. Verfahren nach Anspruch 2,
wobei die Kamera (22) eine Navigationskamera ist, deren Daten zur Navigation des Flugkörpers (2) verwendet werden.

4. Verfahren nach einem der vorhergehenden Ansprüche,
wobei die Landschaft von dem Flugkörper (2), der den Sender (32) enthält, überflogen wird, das Kanalmodell vom Flugkörper (2) berechnet wird, Daten vom Sender (32) gesendet werden und unter Verwendung des Kanalmodells eine geeignete Vorverzerrung der gesendeten Daten durchgeführt wird.

5. Verfahren nach einem der vorhergehenden Ansprüche,
wobei der Mehrwegesendepfad während einer Bewegung des Senders (32) und/oder Empfängers (34) relativ zur Landschaft entsprechend der Bewegung modifiziert wird und das Kanalmodell mit Hilfe des Landschaftsmodells erneut berechnet wird.

6. Verfahren nach einem der vorhergehenden Ansprüche,
wobei eine Oberflächenbeschaffenheit der Landschaft ermittelt wird und hieraus topografische Reflexionsdaten gewonnen werden, die bei der Erstellung des Kanalmodells berücksichtigt werden.

7. Verfahren nach Anspruch 6,
wobei die Landschaft von einem Flugkörper (2), der den Empfänger (34) und eine Kamera (22) enthält, überflogen wird und die Oberflächenbeschaffenheit der Landschaft aus Bildern der Kamera (22) ermittelt wird.

8. Verfahren nach Anspruch 7,
wobei die Bilder in mehreren Spektralbereichen aufgenommen werden.

9. Verfahren nach einem der vorhergehenden Ansprüche,
wobei die Landschaft von dem Flugkörper (2), der den Empfänger (34) enthält, überflogen wird und eine Taktung für die Erstellung der Entzerrdaten in Abhängigkeit von der Fluggeschwindigkeit des Flugkörpers (2) gewählt wird.

## Claims

1. Method for the equalization of radio signals, in which a multipath transmission path from a transmitter (32) to a receiver (34) is determined from the position of the transmitter (32) and of the receiver (34) in an environment, a channel model for this multipath transmission path is created therefrom and the radio signals transmitted from the transmitter (32) to the receiver (34) are equalized using the channel model, wherein the channel model is established using data from a terrain model of the environment,
**characterized**
**in that** the multipath transmission path is determined from the position of the transmitter (32) and of the receiver (34) and the data from the terrain model, and the channel model is created from the multipath transmission path and the terrain model, and
**in that** the channel model is calculated for an area through which a missile (2) containing the transmitter (32) and/or the receiver (34) will fly, and a flight route through the area is defined on the basis of the channel model.

2. Method according to Claim 1,
wherein the terrain is flown over by the missile (2) that contains the receiver (34) and a camera (22), the terrain is recorded by the camera (22), and the channel model is obtained using the data from the camera (22).

3. Method according to Claim 2,
wherein the camera (22) is a navigation camera whose data are used to navigate the missile (2).

4. Method according to one of the preceding claims,
wherein the terrain is flown over by the missile (2) that contains the transmitter (32), the channel model is calculated by the missile (2), data from the transmitter (32) are transmitted, and appropriate preliminary equalization of the transmitted data is performed using the channel model.

5. Method according to one of the preceding claims,
wherein the multipath transmission path is modified during a movement of the transmitter (32) and/or receiver (34) relative to the terrain according to the movement, and the channel model is calculated again with the aid of the terrain model.

6. Method according to one of the preceding claims,
wherein a surface quality of the terrain is determined, and topographical reflection data are obtained therefrom that are taken into account in the creation of the channel model.

7. Method according to Claim 6,
wherein the terrain is flown over by a missile (2) that contains the receiver (34) and a camera (22), and the surface quality of the terrain is determined from images from the camera (22).

8. Method according to Claim 7,
wherein the images are recorded in a plurality of spectral regions.

9. Method according to one of the preceding claims,
wherein the terrain is flown over by the missile (2) that contains the receiver (34) and clocking for the creation of the equalization data is selected depending on the flight speed of the missile (2).

## Revendications

1. Procédé pour corriger des signaux radioélectriques, avec lequel un chemin d'émission à trajets multiples d'un émetteur (32) à un récepteur (34) est déterminé à partir de la position de l'émetteur (32) et du récepteur (34) dans un environnement, un modèle de canal pour ce chemin d'émission à trajets multiples est créé à partir de celui-ci et les signaux radioélectriques émis de l'émetteur (32) vers le récepteur (34) sont corrigés en utilisant le modèle de canal,
le modèle de canal étant défini en utilisant des données d'un modèle de paysage de l'environnement,
**caractérisé en ce**
**que** le chemin d'émission à trajets multiples est déterminé à partie de la position de l'émetteur (32) et du récepteur (34) et des données du modèle de paysage et le modèle de canal est créé à partir du chemin d'émission à trajets multiples et du modèle de paysage, et
**que** le modèle de canal est calculé pour une région qui sera parcourue en vol par un missile contenant l'émetteur (32) et/ou le récepteur (34) et un itinéraire de vol à travers la région est fixé à l'aide du modèle de canal.

2. Procédé selon la revendication 1, le paysage étant survolé par le missile (2) qui contient le récepteur (34) et une caméra (22), le paysage étant enregistré par la caméra (22) et le modèle de canal étant obtenu en utilisant les données de la caméra (22).

3. Procédé selon la revendication 2, la caméra (22) étant une caméra de navigation dont les données sont utilisées pour la navigation du missile (2).

4. Procédé selon l'une des revendications précédentes, le paysage étant survolé par le missile (2) qui contient l'émetteur (32), le modèle de canal étant calculé par le missile (2), des données étant émises par l'émetteur (32) et une précorrection appropriée des données émises étant effectuée en utilisant le modèle de canal.

5. Procédé selon l'une des revendications précédentes, le chemin d'émission à trajets multiples étant modifié en conséquence du mouvement pendant un mouvement de l'émetteur (32) et/ou du récepteur (34) par rapport au paysage et le modèle de canal étant recalculé à l'aide du modèle de paysage.

6. Procédé selon l'une des revendications précédentes, une nature de surface du paysage étant déterminée et des données de réflexion topographiques étant obtenues à partir de celle-ci, lesquelles sont prises en compte lors de la création du modèle de canal.

7. Procédé selon la revendication 6, le paysage étant survolé par un missile (2) qui contient le récepteur (34) et une caméra (22) et la nature de surface du paysage étant déterminée à partir des images de la caméra (22).

8. Procédé selon la revendication 7, les images étant enregistrées dans plusieurs plages spectrales.

9. Procédé selon l'une des revendications précédentes, le paysage étant survolé par le missile (2) qui contient le récepteur (34) et un cadencement étant choisi pour la création des données de correction en fonction de la vitesse de vol du missile (2).
